Europäisches Patentamt

(19) **European Patent Office**

**Office européen des brevets**

(11) Publication number: **0 220 098**
**B1**

(12) EUROPEAN PATENT SPECIFICATION

(45) Date of publication of the patent specification:
**06.12.89**

(21) Application number: **86402091.2**

(22) Date of filing: **24.09.86**

(51) Int. Cl.⁴: **B60T 13/24**

(54) **Vacuum brake booster.**

(30) Priority: **11.10.85 IT 2244485**

(43) Date of publication of application:
**29.04.87 Bulletin 87/18**

(45) Publication of the grant of the patent:
**06.12.89 Bulletin 89/49**

(84) Designated Contracting States:
**DE FR GB SE**

(56) References cited:
**GB-A- 2 095 351**

(73) Proprietor: **BENDIX ITALIA S.p.A., Via Cavalli 53 A
Casella Postale 66, I-26013 Crema(IT)**

(72) Inventor: **Cadeddu, Leonardo, Via Stazione 23,
I-26013 Crema (CR)(IT)**

(74) Representative: **Timoney, Ian Charles Craig et al,
BENDIX FRANCE Division Technique Service Brevets
Bendix Europe 126, rue de Stalingrad,
F-93700 Drancy(FR)**

## Description

The present invention relates to a vacuum brake booster for automotive vehicles.

With the majority of such vacuum brake boosters there is an inherent problem in that the dead stroke, i.e. the movement of the brake pedal experienced by the vehicle driver before any braking force is produced, is inacceptably long. Various modifications and methods of adjustment have been proposed to reduce the dead stroke. However there still remains a portion of this dead stroke of the brake pedal which is attributable to the initial movement of the pneumatic control valve of the booster. In a typical vacuum brake booster the control valve has three positions which may be defined as fully released, lap and braking and which the valve adopts successively in response to displacement of the vehicle brake pedal. The closure of the control valve results in a pressure differential being applied across the diaphragm of the brake booster. However the pedal movement necessary to move the control valve from its fully released to the lap position is unacceptable to vehicle manufacturers and is associated with a delayed response time.

GB-A 2 095 351 discloses such a vacuum brake booster comprising a power piston defining a first bore, limited at one end by a reaction disc, and in which is slidably received a plunger linked to an input push rod, the power piston defining a second bore in which is mounted a poppet valve adapted to cooperate with a valve seat on the power piston at the end of the first bore remote from the reaction disc and with a plunger, whose length is greater than the length of the first bore between the reaction disc and the valve seat.

It is an object of the present invention to provide such a vacuum brake booster, but in which the dead stroke associated with the closure of the control valve is reduced, and, in particular, in which the dead stroke is reduced automatically as soon as the vacuum is applied to the booster when the vehicle engine is started.

This object is achieved with a booster having the characteristics claimed in the main claim 1.

One embodiment of the invention will now be described by way of example with reference to the accompanying drawings in which:

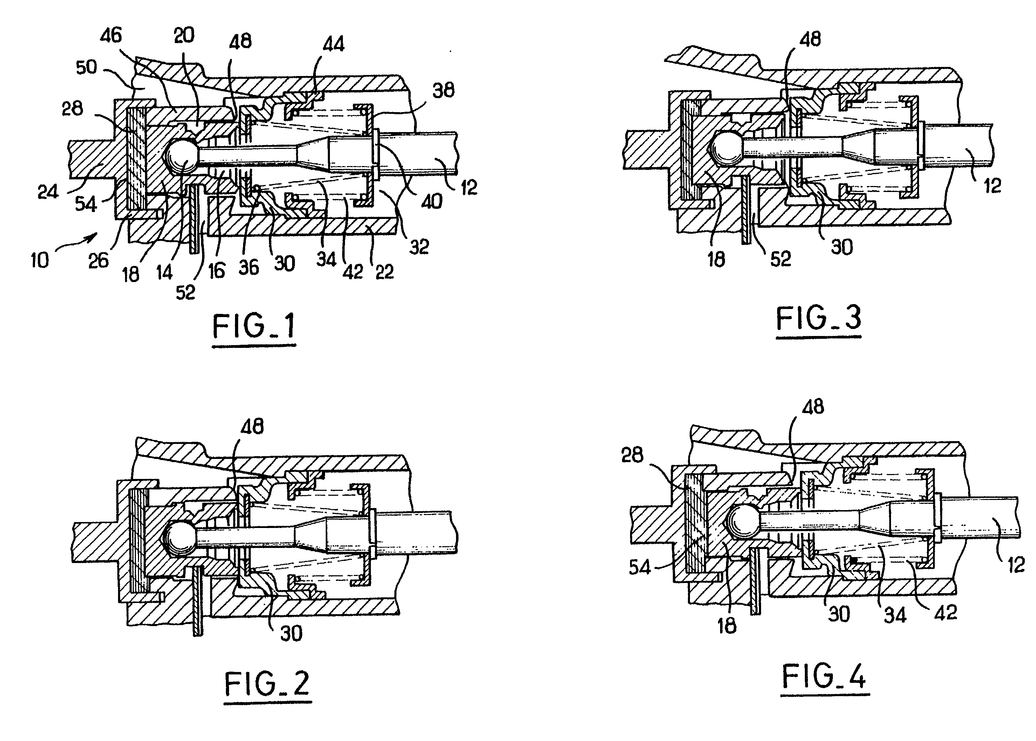

Figures 1 to 4 are each a partial longitudinal section of a vacuum brake booster according to the invention, each showing the control valve in a respective operating position.

As shown in the drawings, a vacuum brake booster 10, the majority of which is not shown, comprises a push rod 12 which is linked to the brake pedal (not shown) of a vehicle. A ball 14 at the end of the push rod 12 is received within an opening 16 in a plunger 18 which is slideably mounted in a bore 20 of a plastics piston of which the rearmost part is generally shown 22. An output rod 24 intended to be connected to the piston of an associated master cylinder (not shown) is mounted on the plastics piston 22 and contains, in an enlarged portion 26, a reaction disc 28 made of an elastomeric material. A poppet valve 30 is mounted within a second bore 32 of the plastics piston 22 and is urged to the left (when viewing the drawings) by a spring 34 which is located between an inner surface 36 of the poppet valve 30 and a disc 38 which is mounted on the push rod 12 by means of a circlip 40. A return spring 42 is received between the disc 38 and a retaining ring 44 is fixedly mounted in the second bore 32. An end of a part 46 of the plastics piston 22 which contains the bore 20 forms a valve seat 48 which is engageable by the poppet valve 30 to interrupt communication between a passage 50, leading to a first, e.g. vacuum, chamber of the booster (not shown), and the second bore 32. A second passage 52 intercommunicates the second, e.g. working booster chamber (not shown) with bore 20 of the plastics piston 22.

In accordance with the invention the axial length of the plunger 18 is greater than the axial length of the bore 20 in part 46 of the plastics piston 22 between the disc 28 and the seat 48. In a preferred embodiment the plunger 18 is 0.3 mm longer than the bore 20, however a range of 0.1 to 1 mm is envisaged. In addition the return spring 42 has a lesser stiffness than equivalent springs in previously proposed boosters and in a preferred embodiment, for a 0.7 Bar Vac, has a stiffness of 2 kg, although a range of 0.5 to 3.5 kg is also envisaged. Thus the return spring 42 exerts a lesser force on the push rod 12 than in previously proposed boosters.

The result of the above described characteristics is that the booster is able to adopt four distinct positions. The fully released position, with the vehicle motor switched off and atmospheric air in both booster chambers is shown in Fig. 4. In this position the return spring 42 urges the push rod 12 into an extreme rightward position with the valve 48 open and a front face 54 of the plunger 18 clear of the reaction disc 28.

When the vehicle engine is started and a vacuum thus applied to the vacuum chamber, the pressure differential acting on the annular active pressure areas of the poppet valve 30 moves the poppet valve and the plunger 18 to the left (when viewing the drawings) until the plunger 18 comes into contact with the reaction disc 28. This position is shown in Fig. 1 and is referred to as the ready position. In this position the various tolerances of the valve assembly have been taken up and the valve 48 is minimally open. Thus, as soon as the vehicle engine is started, the device moves automatically into a position of minimum dead travel.

In Fig. 2 the booster is shown in the position which it adopts after an incremental movement of the brake pedal by the vehicle driver. In this position, known as the lap position, the poppet valve 30 has closed against valve seat 48, thus stopping inter-communication between the booster chambers. This position is, however, an intermediate position and does not involve braking of the vehicle. Further movement of the brake pedal causes the booster to adopt the position shown in Fig. 3 which is that in which braking of the vehicle occurs. In this position the poppet valve 30 is closed against its seat 48 and the plunger 18 has moved clear of the poppet valve to permit atmosphere air to pass down passage 52 to the second booster chamber. The further displacement of the plunger 18 depends on the force applied to the push rod 12.

It should be noted that when the brake pedal is released upon termination of braking, the return spring 42 and spring 34 and the various reaction forces return the booster to the fully released position shown in Fig. 4. In this position the poppet valve 30 is fully open and an equal vacuum is then applied to both the front and rear booster chambers. When the vacuum in the two chambers is equal the booster moves automatically to the ready position shown in Fig. 1 under the effect of the pressure differential acting on the annular effective surface of the poppet valve.

Thus it will be seen that as a result of the invention the booster will automatically adopt a ready position as soon as the vehicle engine is switched on, and upon termination of braking, in which position the dead stroke of the push rod is reduced to a minimum.

## Claims

1. A vacuum brake booster comprising a power piston (22) defining a first bore (20), limited at one end by a reaction disc (28), and in which is slidably received a plunger (18) linked to an input push rod (12), the power piston (12) defining a second bore (32) in which is mounted a poppet valve (30) adapted to cooperate with a valve seat (48) on the power piston (22) at the end of the first bore (20) remote from the reaction disc (28) and with the plunger (18), the length of the plunger (18) being greater than the length of the first bore (20) between the reaction disc (28) and the valve seat (48), said booster being characterized in that it further comprises a return spring (42) whose force lies within the range 0.5 to 3.5 kg, and which enables the booster, in use, to move a ready position under the effect of the pressure differential acting on an annular effective surface (s) of the poppet valve (30).

2. A booster as claimed in claim 1, characterized in that the plunger (18) is between 0.1 mm and 1 mm longer than the length of the first bore (20) .

3. A booster as claimed in claim 2, characterized in that the plunger (18) is 0.3 mm longer than the first bore (20).

## Patentansprüche

1. Unterdruck-Bremsverstärker mit einem Hauptkolben (22), in welchem eine erste Bohrung (20) gebildet ist, welche an einem Ende durch eine Reaktionsscheibe (28) begrenzt ist und worin ein Tauchkolben (18) verschiebbar aufgenommen ist, der an einer Eingangs-Schubstange (12) angelenkt ist, wobei der Hauptkolben (12) eine zweite Bohrung (32) bildet, worin ein Tellerventil (30) angebracht ist, welches geeignet ist, um mit einem Ventilsitz (48) am Hauptkolben (22) an demjenigen Ende der ersten Bohrung (20), welches von der Reaktionsscheibe (28) entfernt gelegen ist, und mit dem Tauchkolben (18) zusammenzuwirken, wobei die Länge des Tauchkolbens (18) größer ist als die Länge der ersten Bohrung (20) zwischen der Reaktionsscheibe (28) und dem Ventilsitz (48), wobei der Verstärker dadurch gekennzeichnet ist, daß er ferner eine Rückstellfeder (42) umfaßt, deren Kraft in dem Bereich von 0,5 bis 3,5 kg liegt und welche den Verstärker befähigt, im Gebrauch in eine Bereitschaftsstellung unter der Wirkung der Druckdifferenz, die auf eine effektive Ringoberfläche (s) des Tellerventils (30) einwirkt, zu bewegen.

2. Verstärker nach Anspruch 1, dadurch gekennzeichnet, daß der Tauchkolben (18) zwischen 0,1 mm und 1 mm länger als die Länge der ersten Bohrung (20) ist.

3. Verstärker nach Anspruch 2, dadurch gekennzeichnet, daß der Tauchkolben (18) um 0,3 mm länger ist als die erste Bohrung (20).

## Revendications

1. Servofrein à dépression comprenant un piston assisté (22) incluant un premier alésage (20), limité à une extrémité par un disque de réaction (28), et dans lequel est monté coulissant un piston (18) relié à une tige de poussée d'entrée (12) le piston (12) incluant un second alésage (32) dans lequel est montée une soupape (30) prévue pour agir conjointement avec un siège (48) sur le piston de puissance (22) à l'extrémité du premier alésage (20) distant du disque de réaction (28) et avec le piston (18), la longueur du piston (18) étant supérieure à la longueur du premier alésage (20) entre le disque de réaction (28) et le siège de soupape (48), ledit servofrein étant caractérisé en ce qu'il comprend en outre un ressort de rappel (42) dont la force est comprise dans la plage de 0,5 à 3,5 kg, et qui permet au servofrein d'atteindre une position préparant le fonctionnement sous l'effet de la pression agissant sur une surface annulaire effective (5) de la soupape (30).

2. Servofrein à dépression selon la revendication 1, caractérisé en ce que le piston (18) est plus long de 0,1 à 1 mm que la longueur du premier alésage (20).

3. Servofrein selon la revendication 1, caractérisé en ce que le piston (18) est plus long de 0,3 mm que le premier alésage (20).

FIG_1

FIG_2

FIG_3

FIG_4

EP 0 220 098 B1